# EUROPÄISCHE PATENTSCHRIFT

(11) **EP 0 483 891 B1**
(45) Veröffentlichungstag und Bekanntmachung des Hinweises auf die Patenterteilung: **14.12.1994**
(21) Anmeldenummer: 91202377.7
(22) Anmeldetag: 17.09.1991
(51) Int. Cl.: G01P 3/48, G01P 1/00

(54) **Auswerteschaltung für einen magnetoresistiven Drehzahlsensor o.dgl.**
Evaluation circuit for a magnetoresistive rotation sensor
Circuit d'évaluation pour un capteur de rotation magnétoresistif

(30) Priorität: 22.09.1990 DE 4030085
(43) Veröffentlichungstag der Anmeldung: 06.05.1992
(73) Patentinhaber: Philips Patentverwaltung GmbH, 22335 Hamburg (DE); Philips Electronics N.V., 5621 BA Eindhoven (NL)
(72) Erfinder: Kordts, Jürgen, W-2000 Norderstedt (DE); Ramm, Michael, W-2104 Hamburg 92 (DE); Kisters, Georg, W-2000 Hamburg 60 (DE)
(74) Vertreter: Hartmann, Heinrich, Dipl.-Ing.

(56) Entgegenhaltungen:
- EP-A- 0 201 682
- WO-A-86/00877
- DE-A- 2 518 054
- FR-A- 2 418 442
- US-A- 4 677 377
- PATENT ABSTRACTS OF JAPAN, Band 8, Nr. 27 (P-252)[1464], 4. Februar 1984;& JP-A-58 182 560

## Beschreibung

Die Erfindung betrifft eine Auswerteschaltung für einen magnetoresistiven Drehzahlsensor o.dgl. mit Komparator und Schalthysterese zur Umsetzung eines analogen Sensorsignals in ein digitales Schaltsignal.

Derartige Auswerteschaltungen dienen im Bereich der Drehzahlerkennung der Umsetzung mechanisch erzeugter Drehzahlinformationen in vorzugsweise digitale elektrische Signale, insbesondere bei Anwendungen in einem Antiblockiersystem.

Aus der Broschüre "Valvo Technische Information 861105, Anwendungen der Magnetfeldsensoren KMZ 10" ist eine Anordnung bekannt, die mit Hilfe eines Zahnrades und eines Magneten ein von dessen Drehzahl abhängendes magnetisches Wechselfeld erzeugt. Ein nach dem magnetoresistiven Effekt arbeitender Drehzahlsensor weist vier vom Magnetfeld abhängige Widerstände auf, die eine Meßbrücke bilden und ein dem anliegenden magnetischen Gleichfeld entsprechendes resultierendes elektrisches Signal erzeugen. Es kann auch die Drehzahl Null erfaßt werden. Die Auswerteschaltung dieser Schaltungsanordnung ist in Bild 33 der Broschüre dargestellt und umfaßt einen Komparator, der das Brückensignal in ein Schaltsignal umsetzt. Zwischen dem nicht invertierenden Eingang und dem Ausgang des Komparators ist ein hochohmiger Widerstand vorgesehen, der zusammen mit dem Sensorbrückenwiderstand eine Schalthysterese erzeugt. Die durch verschiedene Einflüsse hervorgerufenen Offsets im Sensorsignal und der Komparatorschaltung werden durch eine Eingangsbeschaltung des invertierenden Komparatoreingangs derart ausgetrimmt, daß das Potential des nicht invertierenden Eingangs verschoben wird.

Abhängig vom Abstand des Drehzahlsensors zum Zahnrad wird das Magnetfeld kleiner. Diesem meßtechnischen Nachteil steht der Wunsch entgegen, eine möglichst große Einbautoleranz zu gewährleisten. Für einwandfreies Arbeiten der Anordnung müssen die Offsetspannungen dann kleiner als das Nutzsignal sein. Wegen der direkten Ankopplung des Komparators an den Sensor beeinflussen die Eigenschaften des Sensors die des Komparators in nachteiliger Weise. Die Brückenwiderstände des Drehzahlsensors sind stark temperaturabhängig und weisen eine große Streuung auf. Da die Schalthysterese auch von diesen Widerständen abhängig ist, ist diese nachteiligerweise genauso temperatur- und streuungsabhängig. Gleiches gilt für die Offsetkorrektur. In der Eingangsbeschaltung des nicht invertierenden Einganges wird ein in erster Näherung konstanter Strom erzeugt, der durch die Brückenwiderstände fließt und damit einen Spannungsfall erzeugt, der den Offset kompensiert. Diese Offsetkompensation ist somit ebenfalls zusätzlich von der Temperaturdrift und Streuung des Drehzahlsensors abhängig. Wegen der unterschiedlich belasteten Eingänge des Komparators haben Versorgungsspannungsschwankungen etc. einen resultierenden Offset zur Folge. Ferner gelangen die relativ kleinen Sensorsignale direkt auf die Komparatorschaltung und haben daher einen recht großen Einfluß auf dessen Offsets. Diese Anordnung ist des weiteren zu empfindlich gegenüber elektromagnetischen Störsignalen. Diese gelangen über die Versorgungsleitung auf den Sensor. Ist dieser in Waage, dann weist das Sensorsignal keine Störsignale auf. Dadurch, daß die Halbbrücken des Sensors bezüglich der hochfrequenten Störeinstrahlung unterschiedlich belastet werden, ist die Brücke insgesamt nicht mehr in Waage. Störsignale werden durch die Verstimmung abgeschwächt weitergeleitet.

Aus der Produktbeschreibung "Differenz-Hall-Sensor mit schaltendem Ausgang TLE 4920 G" der Firma Siemens ist eine weitere Anordnung bekannt, die mit zwei Hallsonden arbeitet. Mit Hilfe eines Zahnrades wird die Drehzahl einer Achse bestimmt. Das Zahnrad läuft an den Hallsonden vorbei und verstimmt ein durch einen Magneten erzeugtes Magnetfeld. Dadurch wird in den Hallsonden ein unterschiedliches Signal erzeugt, dessen Differenz ein Maß für die Position eines Zahnes zu den Sonden ist und dessen Frequenz von der Drehzahl und der Anzahl der Zähne des Zahnrades abhängt. Dieses Signal gelangt über einen Verstärker auf einen Hochpaß, der temperatur-, alterungs- und mechanikbedingte Offsets abschneidet. Es verbleibt das gewünschte periodische Signal, das einen nachgeordneten Schmitt-Trigger zum Schalten bringt. Vibrationen führen allerdings zu Störsignalen, die durch eine Schalthysterese unterdrückt werden. Wegen des Hochpasses ergibt sich eine untere Grenzfrequenz, so daß niedrige Drehzahlen nicht mehr erfaßbar sind, weshalb ein Antiblockiersystem dann nicht mehr funktionsfähig wäre. Ferner ist ein externer Kondensator nötig, der in der Nähe der Bremsscheibe angeordnet ist und den dortigen Betriebsbedingungen Rechnung tragen muß. Insbesondere führen bremsbedingte hohe Temperaturen zu erhöhten Leckströmen und somit zu Offsetverschiebungen in der Auswerteschaltung.

Aus JP-A- 58-182560 ist eine Auswerteschaltung bekannt, bei der einem Referenzsignal, welches an einem Eingang eines Komparators anliegt, in Abhängigkeit vom Ausgangssignal des Komparators abwechselnd jeweils eines von zwei Hysteresesignalen überlagert wird.
Die Hysteresesignale werden von zwei Konstantstromquellen erzeugt.

Der Erfindung liegt die Aufgabe zugrunde, eine Auswerteschaltung für einen magnetoresistiven Sensor o.dgl. zu schaffen, die unempfindlich gegenüber Temperatur- und Versorgungsspannungsschwankungen, Störeinstrahlungen und Bauteiletoleranzen ist, einfach monolithisch integrierbar ist und bei der Sensoreigenschaften quasi keinen Einfluß auf Offset und Schalthysterese des Komparators haben.

Diese Aufgabe wird erfindungsgemäß dadurch gelöst, daß dem Komparator eingangsseitig Mittel vorgeschaltet sind, um abhängig vom ausgangsseitigen Schaltsignal jeweils einen der Komparatoreingänge mit einem bestimmten Hysteresesignal als Schaltschwelle symmetrisch zu beaufschlagen, und daß zusätzlich dem einen Komparatoreingang ein das Sensorsignal verstärkender Vorverstärker und dem anderen Komparatoreingang ein ein Offsetsignal verstärkender gleich aufgebauter Offsetverstärker vorgeschaltet ist.

Gemäß einer vorteilhaften Ausgestaltung der Erfindung hat der Vorverstärker einen hohen Eingangs- und einen niedrigen Ausgangswiderstand. Bei einem Sensor, der als Referenzpunkt Masse hat, liegt vorteilhaft das Ausgangssignal am nicht invertierenden und das Massesignal am invertierenden Eingang des Vorverstärkers. Umfaßt der Sensor eine Meßbrücke, dann liegt vorteilhaft das Differenzsignal des Meßzweiges an den Eingängen des Vorverstärkers an. Der Vorverstärker weist ferner eine derartig variable Verstärkung auf, daß Offsets des Komparators quasi keinen Einfluß haben und temperaturabhängige Schwankungen des Sensorsignals ausgleichbar sind, d.h. die Verstärkung in dem Maße erhöht werden kann, in dem ein temperaturabhängiger Empfindlichkeitsverlust des Sensors entsteht.

Gemäß einer vorteilhaften und einfachen Variante hat der Vorverstärker einen hohen Eingangs- und niedrigen Ausgangswiderstand und eine Differenzverstärkerschaltung aus einer Stromquelle zwei Transistoren und zwei Widerständen. Ferner eine derartig variable Verstärkung, daß Offsets des Komparators quasi keinen Einfluß haben und temperaturabhängige Schwankungen des Sensorsignals ausgleichbar sind. Bei dieser Ausgestaltung liegt das Differenzsignal zwischen einem Sensorsignalausgang und Masse bzw. das einer Meßbrücke des Sensors an den Eingängen des Vorverstärkers an.

Erfindungsgemäß ist der Offsetverstärker mit dem invertierenden Eingang des Komparators verbunden und mit dem Vorverstärker gleich aufgebaut und daß eingangsseitig anliegende Offsetsignal, das in einem Offsetnetzwerk erzeugt wird, entspricht dem Offsetsignal des Sensors, so daß die Ausgänge des Vorverstärkers und des Offsetverstärkers sich bei Drift der Versorgungsspannung und anderer Offsets in gleicher Weise ändern.

Gemäß einer bevorzugten Ausgestaltung der Erfindung umfassen die Mittel zur Beaufschlagung eines Hysteresesignals eine Hysteresesignalquelle, zwei Summierglieder, und einen Schalter. Ein Summierglied ist zwischen den Ausgang des Vorverstärkers und den nicht invertierenden Komparatoreingang geschaltet. Das andere Summierglied ist zwischen den Ausgang des Offsetverstärkers den invertierenden Komparatoreingang geschaltet. Der Schalter weist einen Steueranschluß auf, der mit dem Ausgang des Komparators verbunden ist. Mit ihm kann abwechselnd über eine Verbindungsleitung das Hysteresesignal dem einen bzw. dem anderen Summierglied zugeführt werden.

Vorteilhaft können die Summierglieder mit Operationsverstärker gleich ausgebildet sein und sich deren vorzeichengleiche Offsets durch Differenzbildung im Komparator herausheben.

Gemäß der vorteilhaften einfachen Variante der Erfindung können die Summierglieder gleich sein und aus je einem der Widerstände des Vor- bzw. Offsetverstärkers gebildet sein, so daß sich deren vorzeichengleiche Offsets durch Differenzbildung im Komparator herausheben. Über den Schalter können die Summierglieder mit dem Hysteresesignal beaufschlagt werden.

Erfindungsgemäß schaltet der Schalter das Hysteresesignal vom Summierglied in der Verbindungsleitung zwischen dem Offsetverstärker und dem Komparator auf das andere Summierglied, wenn das Ausgangssignal des Vorverstärkers um das Hysteresesignal größer ist, als das Ausgangssignal des Offsetverstärkers und in umgekehrter Schaltrichtung entsprechend um das Hysteresesignal kleiner ist, und so fort.

Gemäß einer besonderen Ausgestaltung der Erfindung ist das Hysteresesignal temperaturabhängig veränderbar, um den Einfluß der Temperaturabhängigkeit des Sensors zu kompensieren, wenn die Verstärkung der Verstärker konstant gehalten wird.

Gemäß einer weiteren Ausgestaltung der Erfindung kann dem Vorverstärker ein Hochfrequenzfilter vorgeschaltet und ferner die Auswerteschaltung in integrierter, beispielsweise monolithischer Technik aufgebaut sein.

Durch den erfindungsgemäß dem Komparator vorgeschalteten Vorverstärker, ferner den vorgeschalteten Offsetverstärker und die symmetrische Beaufschlagung der Verstärkerausgänge mit dem Hysteresesignal ergeben sich weiter folgende Vorteile. Die Sensoreigenschaften und Komparatoreigenschaften sind durch die Verwendung des Vorverstärkers unabhängig voneinander. Dadurch können die Eigenschaften des Gesamtsystems, insbesondere hinsichtlich des Offsetverhaltens, optimiert werden. Durch den völlig gleichartigen Aufbau von Vor- und Offsetverstärker werden Einflüsse durch Temperatur- und Versorgungsspannungsschwankungen unterdrückt. Durch den symmetrischen Eingang des Vorverstärkers ist weiterhin eine gute Unterdrückung gegenüber Störsignalen gegeben, die über die Versorgungsleitung und den Sensor auf den Vorverstärker wirken. Verstärkung und Schalthysterese sowie deren gewünschte Temperaturabhängigkeiten sind auf einfache Weise durch Änderung des Hysteresesignals bzw. der Verstärkung des Vor- und Offsetverstärkers einstellbar. Die gesamte Auswerteschaltung ist einfach und gut integrierbar.

Weitere besondere Ausgestaltungen der vorliegenden Erfindung ergeben sich aus den Unteransprüchen.

Einige Ausführungsbeispiele sind nachfolgend unter Bezugnahme auf Zeichnungen näher erläutert. Darin zeigt:
- Fig. 1: den prinzipiellen Aufbau einer erfindungsgemäßen Auswerteschaltung,
- Fig. 2: den Aufbau einer erfindungsgemäß modifzierten Auswerteschaltung nach Fig. 1,
- Fig. 3: das prinzipielle Zusammenspiel des Vor- und Offset-Verstärkerausgangssignals mit dem Schalt- und Hysteresesignal über der Zeit, und
- Fig. 4: den Eingangs- und Komparatorteil einer integrierten Auswerteschaltung.

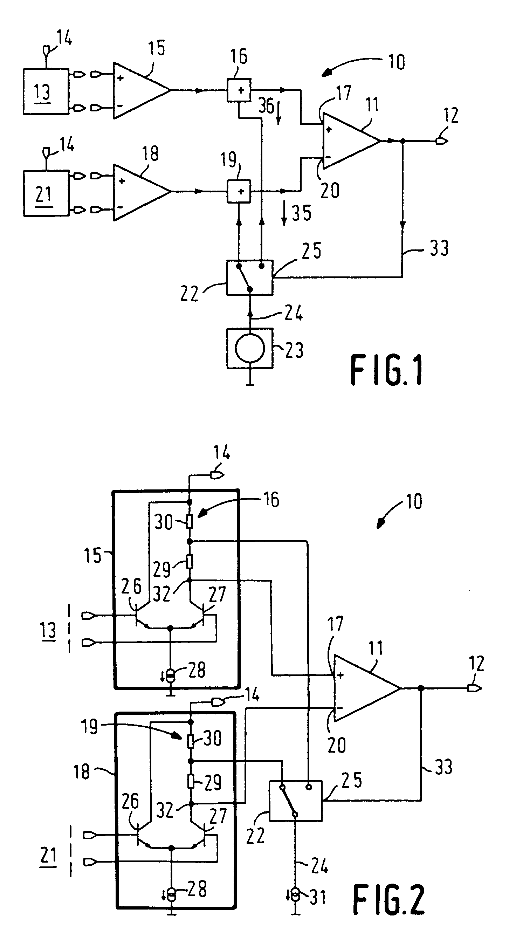

Fig. 1 zeigt den prinzipiellen Aufbau einer erfindungsgemäßen Auswerteschaltung 10, die einen Komparator 11 aufweist, an dem sich ausgangsseitig ein digitales Schaltsignal 12 ergibt, das in gewünschter Weise dem analogen Sensorsignal eines Sensors 13 entspricht. Der Sensor 13 wird mit einer Versorgungsspannung 14 versorgt, und ist ausgangsseitig mit dem Eingang eines Vorverstärkers 15 verbunden, dessen Ausgang über ein Summierglied 16 mit dem nicht invertierenden Eingang 17 des Komparators 11 verbunden ist. Ein Offsetverstärker 18 ist ausgangsseitig über ein Summierglied 19 mit dem invertierenden Eingang 20 des Komparators verbunden. Der Offsetverstärker 18 wird eingangsseitig mit dem Ausgangssignal eines Offsetnetzwerkes 21 beaufschlagt, das über die Versorgungsspannung 14 versorgt wird. Die Summierglieder 16 und 19 werden über einen Schalter 22 abwechselnd und über eine Verbindungsleitung mit einer Hysteresesignal-Quelle 23 verbunden und mit einem Hysteresesignal 24 beaufschlagt. Der Schalter 22 weist einen Steueranschluß 25 auf, der über eine Leitung 33 mit dem Ausgang des Komparators 11 verbunden ist.

Der Drehzahlsensor 13 kann verschieden aufgebaut sein. Bei einigen derartigen Sensoren 13 wird das Ausgangssignal an nur einem Anschluß abgegeben. Der Referenzpunkt ist dann Masse. Der nicht invertierende Eingang des Vorverstärkers 15 ist dann mit dem Ausgangssignal des Drehzahlsensors 13 verbunden und der invertierende Eingang des Vorverstärkers 15 liegt dann auf Masse. Andere Sensoren 13, etwa magnetoresistive Drehzahlsensoren mit einer Meßbrücke, haben zwei Signalausgänge, die dann mit den Eingängen des Vorverstärkers entsprechend verbunden sind, so daß dieser das Differenzsignal verstärkt. Der Vorverstärker 15 verstärkt das sehr kleine Sensorsignal so weit, daß die Offsets des nachfolgenden Komparators 11 nur noch einen untergeordneten Einfluß haben. Durch einen hohen Eingangswiderstand des Vorverstärkers 15 wird der Sensor 13 nicht belastet und damit seine Eigenschaften nicht verändert. Durch einen niedrigen Ausgangswiderstand des Vorverstärkers 15 werden wiederum die Eigenschaften des nachfolgenden Komparators 11 nicht verändert. Das im Offsetnetzwerk 21 erzeugte Offsetsignal gelangt entsprechend dem Sensorsignal auf die Eingänge des Offsetverstärkers 18, der genau die gleichen Eigenschaften aufweist, wie der Vorverstärker 15. Beim Driften der Versorgungsspannung 14, der Temperatur oder bei Streuungen der einzelnen Komponenten des Vorverstärkers 15 und des Offsetverstärkers 18 verändern sich deren Ausgangssignale in gleicher Weise. Da der nachfolgende Komparator 11 nur das Differenzsignal auswertet, heben sich diese Änderungen heraus.

Fig. 2 zeigt eine erfindungsgemäße einfache Variante der Auswerteschaltung 10. Das Ausgangssignal des nicht dargestellten Sensors 13 gelangt auf die Eingänge des Vorverstärkers 15, der ebenso wie der Offsetverstärker 18 als Differenzverstärkerschaltung mit zwei entsprechend geschalteten Transistoren 26, 27, einer Stromquelle 28 und ferner mit einem Vor- und Hysteresewiderstand 29 und 30 aufgebaut ist. Die Verstärkung der Verstärker 15 und 18 wird durch die Summe der Widerstände 29 und 30 und den Strom der Stromquelle 28 bestimmt. Da wegen der Offsetfehler beide Schaltungen der Verstärker 15 und 18 exakt identisches Verhalten zeigen müssen, ist diese Variante zweckmäßigerweise in integrierter Schaltungstechnik zu realisieren. Die Eingänge der Verstärker 15 und 18 sind jeweils mit einer Basis der Transistoren 26 und 27 verbunden. Die Summierglieder 16 und 19 sind bei dieser Auswerteschaltung 10 durch den Hysteresewiderstand 30 der Verstärker 15 und 18 integriert in besonders einfacher Weise ausgebildet. Bei dieser Variante schrumpfen die Summierglieder 16 und 19 quasi zu Summierpunkten an der Stelle, wo über den Schalter 22 ein Hysteresesignal 24 in Form einer Stromquelle 31 angeschlossen ist. Das Hysteresesignal 24 wird dann durch das Produkt des Stromes der Stromquelle 31 und dem Hysteresewiderstand 30 gebildet. Der nicht invertierende Eingang 17 des Komparators 11 ist in dieser Variante mit einem Anschlußpunkt 32 zwischen dem Vorwiderstand 29 und dem Kollektor des Transistors 27 des Vorverstärkers 15 verbunden. Der invertierende Eingang 20 des Komparators 11 ist mit dem entsprechenden Anschlußpunkt 32 des Offsetverstärkers 18 verbunden. Das Schaltsignal 12 ist über eine Leitung 33 an den Steueranschluß 25 des Schalters 22 zurückgeführt. An den Verstärkern 15 und 18 liegt die Versorgungsspannung 14 an.

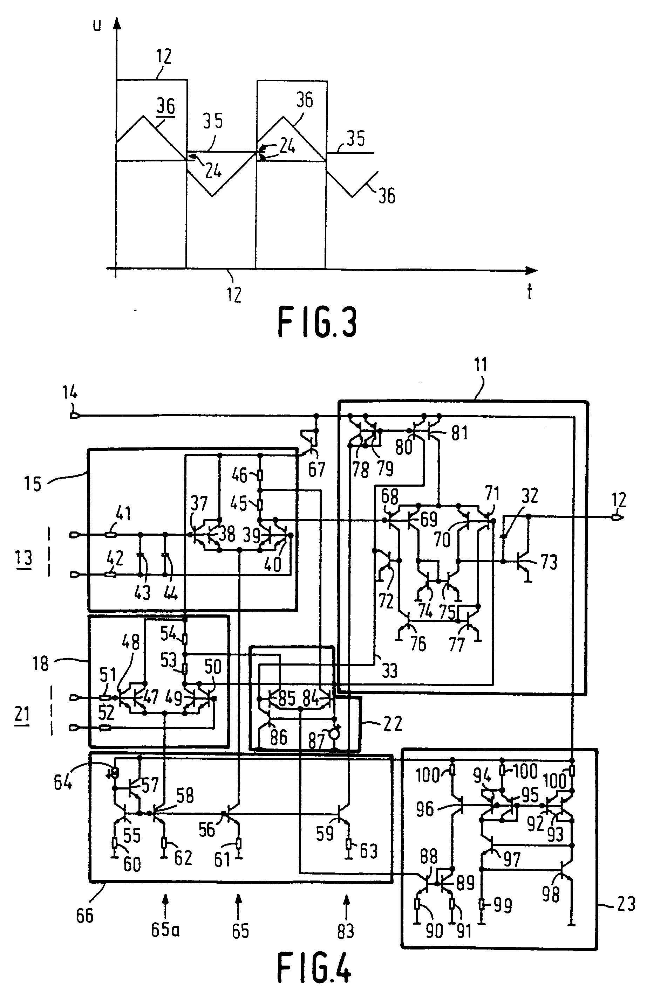

In Fig. 3 sind die verschiedenen Schaltzustände, d.h. der Spannungsverlauf des Schaltsignals 12, der am Ausgang des Summierglieds 16 und der am Ausgang des Summierglieds 19 über der Zeit dargestellt. Hier wird darauf hingewiesen, daß der dreieckförmige Kurvenverlauf nur beispielhaft ist und dieser auch sinusförmig oder anders geartet sein kann. Über die Summierglieder 16 und 19 gelangen die Ausgangssignale des Vorverstärkers 15 und die des Offsetverstärkers 18 an die Eingänge 17 und 20 des Komparators 11, der je nach dem, welches Signal größer ist, ein Schaltsignal 12 mit dem Wert "high" oder "low" abgibt. Das Schaltsignal 12 gelangt über die Leitung 33 auf den Schalter 22, der das Hysteresesignal 24 entweder mit dem Summierglied 16 oder dem Summierglied 19 verbindet.

Angenommen, das Schaltsignal 12 ist derart, daß der Schalter 22 das Hysteresesignal an das Summierglied 19 legt, dann wird das Offsetsignal des Offsetverstärkers 18 um das Hysteresesignal 24 angehoben. Dieses angehobene Signal ist mit 35 gekennzeichnet. Damit nun der Komparator 11 schalten kann, muß das Ausgangssignal des Vorverstärkers 15 größer werden als das um das Hysteresesignal 24 erhöhte Ausgangssignal des Offsetverstärkers 18. In diesem Moment schaltet der Schalter 22 um, und das Signal am Ausgang des Summiergliedes 16 wird um das Hysteresesignal 24 erhöht und das Signal 35 sinkt auf seinen ursprünglichen Wert ab. Das erhöhte Signal am Ausgang des Summiergliedes 16 ist mit 36 gekennzeichnet. Damit der Komparator 11 nun wieder zurückschalten kann, muß das Ausgangssignal des Vorverstärkers 15 um das Hysteresesignal 24 kleiner sein, als das Ausgangssignal des Offsetverstärkers 18. D.h., nach einem Schaltvorgang muß sich das Ausgangssignal des Vorverstärkers 15 um die sogenannte Schalthysterese von dem doppelten Wert des Hysteresesignals 24 in die gegenläufige Richtung bewegen, bis ein erneutes Schalten erfolgt. Die Schalthysterese ist somit nur vom Hysteresesignal 24 abhängig.

Die in Fig. 1 dargestellten Summierglieder 16 und 19 können z.B. mit einem Operationsverstärker in bekannter Weise ausgebildet sein. Die Offsets der Summierglieder 16 und 19 heben sich durch die Differenzbildung am Komparator 11 auf, wenn sie gleiches Vorzeichen und Größe haben.

Oft ist es sinnvoll, das Hysteresesignal 24 bzw. die Verstärkungen der Verstärker 15 und 18 temperaturabhängig zu gestalten. So ist z.B. der aus der genannten Broschüre "Technische Informationen ..." bekannte magnetoresistive Sensor bei 150°C nur noch halb so empfindlich wie bei Raumtemperatur, weshalb sein Ausgangssignal bei sonst gleichen Bedingungen auch nur halb so groß ist. Bei kleinen Ausgangssignalen des Sensors führt das dann dazu, daß die Hystereseschwellen bei Raumtemperatur, nicht aber bei beispielsweise 150°C überwunden werden, wenn die Hystereseschwellen fest sind. Aus diesem Grund wird die Schalthysterese derart temperaturabhängig gemacht, daß sie beispielsweise bei 150°C ebenfalls auf die Hälfte abgesunken ist. Eine andere Möglichkeit, den Empfindlichkeitsverlust dieses Sensors zu korrigieren, besteht darin, die Verstärkung der Verstärker 15 und 18 in genau dem gleichen Maße zu erhöhen.

Fig. 4 zeigt u.a. den Eingangs- und Komparatorteil einer integrierten Auswerteschaltung 10 für einen magnetoresistiven Sensor 13 mit einer Brückenschaltung. Der Vorverstärker 15 umfaßt im wesentlichen eine Differenzverstärkerschaltung mit je zwei Transistoren 37, 38 und 39, 40 je Zweig und den Widerständen 46 und 45 im Kollektorzweig der Transistoren 39 und 40 sowie Widerständen 41 und 42 in den Eingängen mit parallel dazu angeordneten Kondensatoren 43 und 44. Der Offsetverstärker 18 ist mit Ausnahme der Kondensatoren genauso aufgebaut und enthält die Transistoren 47, 48, 49, 50 und die Widerstände 51, 52, 53 und 54. Beide Verstärker 15 und 18 sind mit den in Fig. 2 beschriebenen bis auf die Eingangsbeschaltung gleich. Aus Gründen der elektromagnetischen Verträglichkeit befindet sich im Eingang des Vorverstärkers 15 ein Filter aus den Elementen 41, 42, 43 und 44, das die vom Sensor 13 kommenden hochfrequenten Störsignale unterdrückt. Im Offsetverstärker 18 wurden im Eingang die Elemente 51 und 52 hinzugefügt, um die gleichen elektrischen Gleichspannungseigenschaften wie beim Vorverstärker 15 zu erreichen.

Von einer Strombank 66 aus den Transistoren 55, 56, 57, 58 und 59 sowie den Widerständen 60, 61, 62 und 63 werden sowohl der Vorverstärker 15 als auch der Offsetverstärker 18 mit Strömen versorgt, die von einer einzigen Stromquelle 64 abgeleitet und demzufolge relativ zueinander konstant sind. Die Verstärkungen des Vorverstärkers 15 und des Offsetverstärkers 18 haben hier temperaturunabhängig einen festen Wert und berechnen sich aus dem Produkt der Summe der Widerstände 45 und 46 bzw. 53 und 54 mit dem Strom in dem Zweig 65 bzw. 65a der Strombank 66 dividiert durch die vierfache Temperaturspannung. Der Zweig 65 der Strombank 66 ist dem Transistor 56 zugeordnet. Da sowohl die Temperaturspannung als auch die Widerstände 45 und 46 bzw. 53 und 54 einen Temperaturkoeffizienten aufweisen, muß der Strom im Zweig 65 bzw. 65a einen entsprechenden gegenläufigen Temperaturkoeffizienten aufweisen, damit die Verstärkung des Vorverstärkers 15 und des Offsetverstärkers 18 temperaturunabhängig wird. Der Strom im Zweig des Transistors 55 kann z.B. von einer Bandabstandsreferenzschaltung (Bandgapreferenzschaltung) herstammen, dessen dort erzeugter Strom genau den gewünschten Temperaturkoeffizienten aufweist.

Die Verstärker 15 und 18 können über einen Transistor 67 an der Versorgungsspannung 14 von z.B. 5 Volt liegen. Der Transistor 67 sorgt dafür, daß die Ausgangssignale der Verstärker 15 und 18 um die Durchlaßspannung (Basis-Emitter-Spannung) des Transistors 67 abgesenkt werden, damit der nachfolgende Komparator 11 die dicht an der Versorgungsspannung 14 liegenden Signale einwandfrei verarbeiten kann. Weiterhin wird mit steigender Temperatur die Durchlaßspannung von Transistor 67 kleiner. Gleichzeitig steigt der Strom im Zweig 65 an und sorgt für einen steigenden Spannungsabfall über den Widerständen 45, 46. Als Folge dieser gegenläufigen Effekte bleiben die Potentiale der Ausgangssignale der Verstärker 15 und 18 bezogen auf Werte im unausgesteuerten Zustand nahezu konstant. Dies ist günstig für den nachfolgenden Komparator 11, der damit nur noch einen eingeschränkten (Gleichtakt) Aussteuerbereich zu verarbeiten hat. Der Komparator 11 enthält Transistoren 68 bis 77, sowie Transistoren 78 bis 81 und einen Kondensator 82. Die einzelnen Komponenten sind in Form einer standardmäßigen Doppelkomparatorschaltung, die über den Stromspiegel (Transistoren 78 bis 81) vom Zweig 83 der Strombank 66 mit Strom versorgt wird. Der Zweig 83 ist der zum Transistor 59 gehörende. Der eine Ausgang des Komparators 11 am Transistor 73 ist mit einer nachgeschalteten Schnittstelle o.dgl. verbunden. Der andere Ausgang des Komparators 11 am Transistor 72 gelangt über Leitung 33 auf den Eingang des Schalters 22.

Der Schalter 22 besteht aus Transistoren 84, 85 und 86, von denen 84 und 85 zu einem Differenzverstärker zusammengeschaltet sind. An der Basis des Transistors 84 ist eine Referenzspannung 87 angeschlossen. Die Basis des Transistors 85 ist über die Leitung 33 mit dem Komparator 11 verbunden. Je nach dem, welche Stellung der Komparator 11 hat, wird dann der Transistor 84 oder 85 leitend geschaltet, wobei 86 eine völlige Übersteuerung verhindert. Damit fließt dann entweder durch den Widerstand 46 oder durch 54 der Verstärker 15 bzw. 18 zusätzlich noch das Hysteresesignal 24, das für die Schalthysterese verantwortlich ist. Die Schalthysterese ist, wie vorstehend beschrieben, aus Gründen der Unempfindlichkeit gegenüber Vibrationen erforderlich. Sie ist in dieser Anordnung so mit einem Temperaturkoeffizienten versehen, daß sie bei beispielsweise 150°C gegenüber Raumtemperatur auf die Hälfte absinkt und damit der im gleichen Maße fallenden Empfindlichkeit des Sensors 13 Rechnung trägt. Die Einstellung erfolgt über das Hysteresesignal 24, das durch die an den Schalter 22 angeschlossenen Stromreferenz 23 bestimmt wird.

Die Stromreferenz 23 besteht aus einem Stromspiegel, aus Transistoren 88, 89 und Widerständen 90, 91 sowie aus der sogenannten Basis/Emitter-Referenzspannung mit Transistoren 92 bis 98 und einem Widerstand 99. Die Transistoren 92 bis 96 haben einen Vorwiderstand 100 im Kollektor-/Emitterzweig. Am Widerstand 99 liegt die Durchflußspannung von Transistor 98 an, die mit -2mV/K temperaturabhängig ist. Damit fließt durch den Widerstand 99 ein temperaturabhängiger Strom mit einem Temperaturkoeffizienten, der von der Temperaturabhängigkeit der Basis/Emitter-Durchflußspannung und vom Temperaturkoeffizienten des Widerstandes 99 abhängt. Dieser Strom wird durch Transistor 96, die Transistoren 94, 95 und 92, 93 jeweils gespiegelt und gelangt auf den Stromspiegel mit den Transitoren 89, 88. Mit Widerstand 90 bzw. 91 wird zum einen der Absolutwert des Stromes eingestellt und zum anderen läßt sich damit der Temperaturkoeffizient noch bis zu einem gewissen Grade verändern.

## Patentansprüche

1. Auswerteschaltung für einen magnetoresistiven Drehzahlsensor o.dgl. mit Komparator und Schalthysterese zur Umsetzung eines analogen Sensorsignals in ein digitales Schaltsignal,
dadurch gekennzeichnet, daß dem Komparator (11) eingangsseitig Mittel (16, 19, 22, 23, 33) vorgeschaltet sind, um abhängig vom ausgangsseitigen Schaltsignal (12) abwechselnd jeweils einen der Komparatoreingänge (17, 20) mit einem bestimmten Hysteresesignal (24) als Schaltschwelle symmetrisch zu beaufschlagen, und daß zusätzlich dem einen Komparatoreingang (17) ein das Sensorsignal verstärkender Vorverstärker (15) und dem anderen ein ein Offsetsignal verstärkender gleichartig aufgebauter Offsetverstärker (18) vorgeschaltet ist.

2. Auswerteschaltung nach Anspruch 1,
dadurch gekennzeichnet, daß der Vorverstärker (15) einen hohen Eingangs- und niedrigen Ausgangswiderstand hat, daß das Differenzsignal zwischen Sensorsignalausgang und Masse bzw. das einer Meßbrücke des Sensors (13) an dem nicht- und invertierenden Eingang anliegt, der Verstärker (15) eine derartig variable Verstärkung aufweist, daß Offsets des Komparators (11) quasi keinen Einfluß haben und temperaturabhängige Schwankungen des Sensorsignals ausgleichbar sind.

3. Auswerteschaltung nach Anspruch 1,
dadurch gekennzeichnet, daß der Vorverstärker (15) einen hohen Eingangs- und niedrigen Ausgangswiderstand aufweist, eine Differenzverstärkerschaltung aus einer Stromquelle (28) zwei Transistoren (26, 27) und zwei Widerständen (29, 30) und eine derartig variable Verstärkung hat, daß Offsets des Komparators (11) quasi keinen Einfluß haben und temperaturabhängige Schwankungen des Sensorsignals ausgleichbar sind, und daß das Differenzsignal zwischen Sensorsignalausgang und Masse bzw. das einer Meßbrücke eines Sensors an den Eingängen des Vorverstärkers (15) anliegt.

4. Auswerteschaltung nach Anspruch 2 oder 3,
dadurch gekennzeichnet, daß der mit dem invertierenden Eingang (20) des Komparators (11) verbundene Offsetverstärker (18) mit dem Vorverstärker (15) gleichartig aufgebaut ist und daß das eingangsseitig anliegende Offsetsignal in einem Offsetnetzwerk (21) entsteht, dieses dem des Sensors (13) entspricht, so daß die Ausgänge des Vorverstärkers (15) und des Offsetverstärkers (18) sich bei Drift einer Versorgungsspannung (14) und anderer Offsets in gleicher Weise ändern.

5. Auswerteschaltung nach einem oder mehreren der vorhergehenden Ansprüche,
dadurch gekennzeichnet, daß die Mittel (16, 19, 22, 23, 33) aus einer Quelle (23) für ein Hysteresesignal (24), zwei Summiergliedern (16, 19), von denen je eines in den Verbindungen zwischen den Verstärkern (15, 18) und dem Komparator (11) angeordnet ist und aus einem Schalter (22) bestehen, dessen Steueranschluß (25) mit dem Komparatorausgang verbunden ist und die Summierglieder (16, 19) abwechselnd mit der Quelle (23) verbindet.

6. Auswerteschaltung nach Anspruch 5,
dadurch gekennzeichnet, daß die Summierglieder (16, 19) gleich und mit Operationsverstärker ausgebildet sind und sich deren vorzeichengleiche Offsets durch Differenzbildung im Komparator (11) herausheben.

7. Auswerteschaltung nach Anspruch 5,
dadurch gekennzeichnet, daß die Summierglieder (16, 19) gleich sind und aus den Widerständen (30) der Verstärker (15) und (18) gebildet sind, und daß sich deren vorzeichengleiche Offsets durch Differenzbildung im Komparator (11) herausheben.

8. Auswerteschaltung nach Anspruch 6 oder 7,
dadurch gekennzeichnet, daß der Schalter (22) das Hysteresesignal (24) vom Summierglied (19) des nicht invertierenden Komparatoreingangs (20) auf das andere Summierglied (16) schaltet, wenn das Ausgangssignal des Vorverstärkers (15) um das Hysteresesignal (24) größer ist, als das Ausgangssignal des Offsetverstärkers (18) und in umgekehrter Schaltrichtung entsprechend um das Hysteresesignal (24) kleiner ist.

9. Auswerteschaltung nach Anspruch 8,
dadurch gekennzeichnet, daß das Hysteresesignal (24) bei konstant gehaltener Verstärkung der Verstärker (15) und (18) temperaturabhängig veränderbar ist, um den Einfluß der Temperaturabhängigkeit des Sensors (13) zu kompensieren.

10. Auswerteschaltung nach einem oder mehreren der vorhergehenden Ansprüche,
dadurch gekennzeichnet, daß dem Vorverstärker (15) ein Hochfrequenzfilter aus zwei Kondensatoren (43, 44) zwischen den Eingängen und je Eingang einem Widerstand (41 bzw. 42) vorgeschaltet ist, und daß die Auswerteschaltung (10) in integrierter, z.B. monolithischer Schaltungstechnik aufbaubar ist.

## Claims

1. An evaluation circuit for a magnetoresistive rotary speed sensor or the like with a comparator and switching hysteresis for converting an analog sensor signal into a digital switching signal, characterized in that at the input side the comparator (11) is preceded by means (16, 19, 22, 23, 33) for symmetrically applying, in dependence on the switching signal (12) at the output side, a given hysteresis signal (24) as a switching threshold alternately to one of the comparator inputs (17, 20), additionally one comparator input (17) being preceded by a preamplifier (15) which amplifies the sensor signal, the other comparator input being preceded by an offset amplifier (18) of similar construction which amplifies an offset signal.

2. An evaluation circuit as claimed in Claim 1, characterized in that the preamplifier (15) has a high input resistance and a low output resistance, the difference signal being present between the sensor signal output and ground, or that a measuring bridge of the sensor (13) is connected to the non-inverting input and the inverting input, the amplifier (15) having a variable gain so that offsets of the comparator (11) quasi have no effect and that temperature-dependent fluctuations of the sensor signal can be compensated for.

3. An evaluation circuit as claimed in Claim 1, characterized in that the preamplifier (15) has a high input resistance and a low output resistance, comprises a differential amplifier circuit consisting of a current source (28), two transistors (26, 27), and two resistors (29, 30), and has a variable gain so that offsets of the comparator (11) quasi have no effect and temperature-dependent fluctuations of the sensor signal can be compensated for, the difference signal being present between the sensor signal output and ground, or a measuring bridge of a sensor being connected to the inputs of the preamplifier (15).

4. An evaluation circuit as claimed in Claim 2 or 3, characterized in that the offset amplifier (18) connected to the inverting input (20) of the comparator (11) has the same construction as the preamplifier (15), and that the offset signal present at the input side arises in an offset network (21) and corresponds to that of the sensor (13) so that the output signals of the preamplifier (15) and the offset amplifier (18) vary in the same sense in response to drift of a supply voltage (14) and other offsets.

5. An evaluation circuit as claimed in one or more of the preceding Claims, characterized in that the means (16, 19, 22, 23, 33) consist of a source (23) for a hysteresis signal (24), two summing members (16, 19), each of which is connected in a respective connection between the amplifiers (15, 18) and the comparator (11), and of a switch (22) whose control terminal (25) is connected to the comparator output and alternately connects the summing members (16, 19) to the source (23).

6. An evaluation circuit as claimed in Claim 5, characterized in that the summing members (16, 19) have the same construction and comprise operational amplifiers, their offsets of the same sign being isolated by differentiation in the comparator (11).

7. An evaluation circuit as claimed in Claim 5, characterized in that the summing members (16, 19) are identical and consist of the resistors (30) of the amplifiers (15) and (18), their offsets of the same sign being isolated by differentiation in the comparator (11).

8. An evaluation circuit as claimed in Claim 6 or 7, characterized in that the switch (22) switches the hysteresis signal (24) from the summing member (19) of the non-inverting comparator input (20) to the other summing member (16) when the output signal of the preamplifier (15) exceeds the output signal of the offset amplifier (18) by an amount equal to the hysteresis signal (24) and switches it in the reverse direction when it is smaller by an amount equal to the hysteresis signal (24).

9. An evaluation circuit as claimed in Claim 8, characterized in that the hysteresis signal (24) can be varied in a temperature-dependent manner with a constant gain of the amplifiers (15) and (18), in order to compensate for the effect of the temperature dependency of the sensor (13).

10. An evaluation circuit as claimed in one or more of the preceding Claims, characterized in that the preamplifier (15) is preceded by a high-frequency filter consisting of two capacitors (43, 44) between the inputs and that each input is preceded by a resistor (41, 42), it being possible to construct the evaluation circuit (10) using an integrated circuit technique, for example a monolithic technique.

## Revendications

1. Circuit de traitement pour un capteur magnéto-résistif de vitesse de rotation ou autres, avec un comparateur et de l'hystérésis de commutation pour convertir un signal analogique du capteur en un signal de commutation numérique, caractérisé en ce que le côté d'entrée du comparateur (11) est précédé de moyens (16, 19, 22, 23, 33) pour appliquer de façon symétrique, en fonction du signal de commutation (12) du côté de sortie, un signal d'hystérésis déterminé (24) comme seuil de commutation alternativement à l'une des entrées (17, 20) du comparateur, et en ce qu'une entrée (17) du comparateur est précédée en outre d'un préamplificateur (15) servant à amplifier le signal du capteur, l'autre entrée du comparateur étant précédée en outre d'un amplificateur à décalage (18) de structure similaire servant à amplifier un signal décalé.

2. Circuit de traitement selon la revendication 1, caractérisé en ce que le préamplificateur (15) a une résistance d'entrée élevée et une résistance de sortie faible et en ce que, sur les entrées non inverseuse et inverseuse, sont respectivement présents le signal de différence entre la sortie de signal du capteur et la masse et celui d'un pont de mesure du capteur (13), l'amplificateur (15) ayant un gain variable de sorte que des décalages du comparateur (11) n'ont pratiquement pas d'effet et que des fluctuations dépendantes de la température du signal de capteur peuvent être compensées.

3. Circuit de traitement selon la revendication 1, caractérisé en ce que le préamplificateur (15) a une résistance d'entrée élevée et une résistance de sortie faible et comporte un circuit amplificateur différentiel constitué d'une source de courant (28), de deux transistors (26, 27) et de deux résistances (29, 30) tout en ayant un gain variable au point que des décalages du comparateur (11) n'aient pratiquement pas d'effet et que des fluctuations du signal du capteur dépendantes de la température puissent être compensées et en ce que le signal de différence entre la sortie de signal du capteur et la masse ou celui d'un pont de mesure d'un capteur est présent sur les entrées du préamplificateur (15).

4. Circuit de traitement selon la revendication 2 ou 3, caractérisé en ce que l'amplificateur à décalage (18) relié à l'entrée inverseuse (20) du comparateur (11) a la même structure que celle du préamplificateur (15) et en ce que le signal décalé présent du côté d'entrée se produit dans un réseau à décalage (21) et correspond à celui du capteur (13), de sorte que les signaux de sortie du préamplificateur (15) et de l'amplificateur à décalage (18) varient de la même manière en réaction à une dérive d'une tension d'alimentation (14) et à d'autres décalages.

5. Circuit de traitement selon l'une quelconque des revendications précédentes, caractérisé en ce que les moyens (16, 19, 22, 23, 33) sont constitués par une source (23) pour un signal d'hystérésis (24), deux éléments sommateurs (16,19) insérés chacun dans les liaisons respectives entre les amplificateurs (15, 18) et le comparateur (11), ainsi que par un commutateur (22) dont la borne de commande (25) est reliée à la sortie du comparateur et relie alternativement les éléments sommateurs (16, 19) à la source (23).

6. Circuit de traitement selon la revendication 5, caractérisé en ce que les éléments sommateurs (16, 19) sont de structures identiques et comportent un amplificateur opérationnel, leurs décalages de même signe étant supprimés par différenciation dans le comparateur (11).

7. Circuit de traitement selon la revendication 5, caractérisé en ce que les éléments sommateurs (16, 19) sont identiques et sont constitués par les résistances (30) des amplificateurs (15) et (18), leurs décalages de même signe étant supprimés par différenciation dans le comparateur (11).

8. Circuit de traitement selon la revendication 6 ou 7, caractérisé en ce que le commutateur (22) fait passer le signal d'hystérésis (24) de l'élément sommateur (19) de l'entrée non inverseuse (20) du comparateur à l'autre élément sommateur (16) lorsque le signal de sortie du préamplificateur (15) est supérieur au signal de sortie de l'amplificateur à décalage (18) d'une valeur égale à celle du signal d'hystérésis (24) et le fait passer dans le sens opposé lorsqu'il est inférieur à ce signal de sortie d'une valeur égale à celle du signal d'hystérésis (24).

9. Circuit de traitement selon la revendication 8, caractérisé en ce qu'on peut faire varier le signal d'hystérésis (24) indépendamment de la température, avec un gain constant des amplificateurs (15) et (18), pour compenser l'effet de la dépendance du capteur (13) de la température.

10. Circuit de traitement selon l'une quelconque des revendications précédentes, caractérisé en ce que le préamplificateur (15) est précédé d'un filtre à haute fréquence constitué par deux condensateurs (43, 44) disposés entre les entrées et en ce que chaque entrée est précédée d'une résistance (41, 42), le circuit de traitement (10) pouvant être réalisé par une technique des circuits intégrés, par exemple une technique monolithique.
